# EUROPEAN PATENT SPECIFICATION

(11) **EP 4 157 752 B1**
(45) Date of publication and mention of the grant of the patent: **02.07.2025**
(21) Application number: 21732816.0
(22) Date of filing: 29.05.2021
(51) Int. Cl.: B65G 1/04

(54) **A STORAGE SYSTEM FOR A FACTORY FABRICATING BOARDS**
LAGERSYSTEM FÜR EINE FABRIK ZUR HERSTELLUNG VON BRETTERN
SYSTÈME DE STOCKAGE POUR USINE DE FABRICATION DE PANNEAUX

(30) Priority: 29.05.2020 FI 20205562
(43) Date of publication of application: 05.04.2023
(73) Proprietor: Dieffenbacher Panelboard Oy, 15560 Nastola (FI)
(72) Inventor: MÄNNIKKÖ, Ari, 15560 Nastola (FI)
(74) Representative: Hartdegen, Helmut
(86) International application number: PCT/EP2021/064468
(87) International publication number: WO 2021/240010

(56) References cited:
- EP-A1- 2 818 432
- WO-A1-2015/088422
- JP-A- S4 936 075
- JP-U- S6 376 774
- US-A1- 2014 140 793

## Description

### FIELD OF THE INVENTION

The object of the invention is a storage system for use in factories fabricating boards, especially particle boards, OSB boards or MDF boards, the storage system comprising rails in the longitudinal direction of the storage and rails in the crosswise direction of the storage as well as at least one satellite wagon pair that is arranged to move along longitudinal rails, and at least one main wagon that is arranged to move along the crosswise rails by means of rail wheels installed on the main wagon, the main wagon comprising two longitudinal rail pairs for a satellite wagon pair.

### BACKGROUND OF THE INVENTION

The invention thus relates to a storage system for use in factories fabricating boards, especially particle boards, OSB boards and MDF boards, in which large board stacks are stored temporarily. Generally speaking, wood-based boards manufactured on a continuous-action press line are stored for a certain time in intermediate storage before the downstream work phases, such as sanding and sawing. The storage is also used for storing different grades of boards.

The typical mass of large stacks in factories fabricating particle boards, OSB boards and MDF boards is 40-80 tonnes. The typical stack height is 3-5 m, width 1.8-3.6 m and length 5-9 m. The stacks in the storage system that is the object of the invention are transported on two wagons running on rails under the stack in the longitudinal direction of the storage, the wagons transferring a stack to rows of the storage resting on three longitudinal supports. These wagons moving in the longitudinal direction are herein called satellite wagons and they always operate in pairs. The transfer of stacks to a storage row and the fetching of stacks from a storage row occurs in such a way that a satellite wagon pair lifts a stack from the bottom surface of the stack, such that the stack detaches from its longitudinal supports, and transports the stack to a storage row and lowers the stack onto the longitudinal supports in the storage or, when fetching from the storage, onto the supports on the main wagon (i.e. the crosswise wagon). The moving of a satellite wagon pair in a crosswise direction, i.e. from one longitudinal row to another longitudinal row, occurs by driving the satellite wagon pair onto the main wagon, which then transports the satellite wagon pair to the next worksite, i.e. to some other longitudinal row.

Storing systems with apparent resemblances are already known in the state of the art and exemplary shown with JPS4936075A, US2014/140793A1, EP2818432A1, WO 2015/088422A1 and JPS6376774U. S49 36075 A discloses a storage system with the features of the preamble of claim 1.

The main wagon comprises rail pairs in the longitudinal direction of the storage with intervals between them and height positions suited to the longitudinal rails in the storage.
The main wagon can comprise three fixed longitudinal support elements, onto the support of which the load being handled can be lowered. These longitudinal supports can be conveyor elements, with which the load can be transferred in the longitudinal direction of the storage.

The main wagon travels in the crosswise direction of the storage resting on two or more rails, the height position of the rails being determined according to the structural height of the main wagon. The aforementioned operational height dimension is the vertical distance between the height position of the crosswise and longitudinal rails of the storage.

In a structure according to what is known in the art the aforementioned operational height dimension is relatively large, owing to which the longitudinal rails of the storage area have to be installed high in relation to the height of the crosswise rails.

In a main wagon according to what is known in the art the rail wheels bearing the structure and load are on both edges of the wagon, in which case the wheelbase and, at the same time, the load-bearing span become relatively long. With a long span, the height of the structure must be increased, or disadvantageously thick and heavy steel plate must be used in the structure, so that deflection of the structure under load would be adequately small. This ensures that the longitudinal rails of the main wagon remain at essentially the same height as the rails in the storage.

A main wagon according to what is known in the art is a large welded structure that, owing to its size, is not transportable in an ordinary shipping container. This, of course, results in higher transportation costs and limits the opportunities for selecting the cheapest manufacturing location.

### SUMMARY OF THE INVENTION

The aim of the present invention is to provide a new type of storage system for large stacks, wherein the operational height dimension of the main wagon, i.e. the crosswise wagon, is as small as possible so that the height position of the longitudinal rails of the storage area in relation to the crosswise rails of the storage (on which the main wagon travels) would be as low as possible, and the height and volume of the steel and/or concrete structure of the storage area as small as possible. According to the invention this is solved with a storage system that is characterized in that the main wagon comprises at the point of at least one crosswise rail at least three rail wheels resting on the rail in question.

The preferred embodiments of the invention are characterized by what is defined in the dependent claims 2-10.

The invention can be implemented in such a way that at the point of each crosswise rail the main wagon has at least three rail wheels resting on the rail. Of these three rail wheels resting on the crosswise rail, the centermost can be situated between the two centermost longitudinal rails on the main wagon. In one embodiment of the invention, the centermost of the three rail wheels resting on a crosswise rail is situated essentially on the longitudinal center line of the main wagon.

One of the advantages of the invention that can be mentioned is that it significantly reduces the material requirements of the storage system structure because the operational height dimension is smaller than previously. The construction costs of a storage with a large surface area will therefore remain lower than previously. In an embodiment of the invention wherein the main wagon comprises two parts of essentially the same size connected to each other, one advantage is that the parts will fit into a standard shipping container. That being the case, also transportation costs are reduced.

Instead of an ordinary rail wheel, two wheels of smaller diameter can be arranged. These wheels of a smaller diameter are preferably arranged with pivoted or flexible bogie suspension to bear an essentially equal load.

The main wagon can be implemented in such a way that it comprises two frame modules, the joint face between the modules being between the two centermost rails in the direction of movement of the main wagon. In a preferred embodiment, the main wagon comprises two frame modules, the joint face between the modules being essentially on the longitudinal center line of the main wagon.

The frame of the main wagon can preferably comprise two steel plates on the horizontal plane arranged at a distance from each other, as well as two longitudinal and transverse web plates installed between them. In this case, it is possible that in the longitudinal web plates of the frame of the main wagon is at least one aperture for bringing in an electric cable from below the longitudinal rail.

### LIST OF FIGURES

In the following, the invention will be described in more detail by the aid of some preferred embodiments with reference to the attached drawings, wherein:
- Fig. 1: presents an overview of a storage system for a factory fabricating particle boards, OSB boards and MDF boards.
- Fig. 2: presents satellite wagons on a storage row.
- Fig. 3: presents the main wagon and the longitudinal rails of the storage, and the determination of the operational height dimension.
- Fig. 4: presents a main wagon according to the invention as seen obliquely from below.
- Fig. 5: presents a main wagon as viewed in the direction of the crosswise rails.
- Fig. 6: presents a side view of a main wagon.
- Fig. 7: presents an oblique view from above of the frontmost half of the main wagon.
- Fig. 8: presents a partly exploded view of the main wagon according to the invention.
- Fig. 9: presents a magnified detail A of Fig. 8.
- Fig.10: presents a magnification of the detail B of Fig. 9.

### DETAILED DESCRIPTION OF THE INVENTION

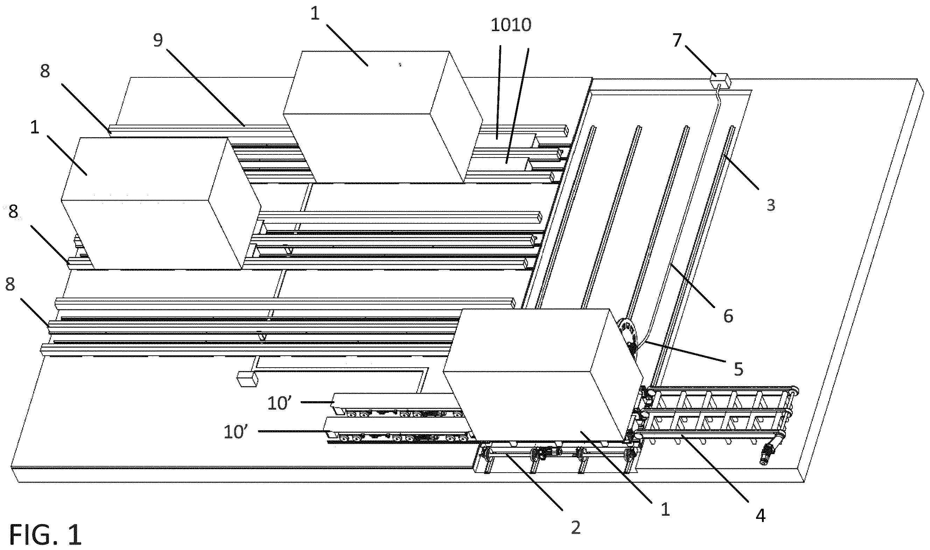

Fig. 1 thus presents an overview of a storage system for a factory fabricating particle boards, OSB boards and MDF boards. The board stacks, three of which are seen here, are marked with the reference number 1. There can, of course, be more board stacks but for the sake of clarity not all are presented. The board stack at the bottom edge of Fig. 1 is on top of a wagon moving in a crosswise direction, i.e. the main wagon 2. The main wagon moves along rails 3. This direction of movement is therefore called the crosswise direction.

On the right-hand side of the main wagon 2 the figure presents a conveyor 4, along which the board stacks come into the storage and exit it. The current supply of the main wagon current takes place via the cable 6 of the current supply unit 7. When the crosswise wagon moves towards the current supply unit 7, the cable 6 winds onto the cable reel 5. Correspondingly, when the main wagon moves away from the current supply unit 7, the cable 6 unwinds from the cable reel 5.

Fig. 1 presents three longitudinal storage rows 8, each of which is formed from three longitudinal supports 9. There can, of course, be considerably more of these storage rows 8 than three. Additionally, they can be on both sides of the main wagon 2. They are presented here now only on the left-hand side of the main wagon 2 when looking at the figure.

Fig. 1 also presents a wagon pair comprising two wagons 10 moving side-by-side in a longitudinal direction. They are referred to hereinafter as satellite wagons, and they lift and move board stacks from below. Presented in the top part of Fig. 1 is a satellite wagon pair that is just going under or coming away from a stack 1. The satellite wagon pair 10 is able to lift a stack into the air and to transfer it either from the main wagon 2 onto a storage row 8 or from a storage row 8 onto the main wagon 2. A satellite wagon pair 10 is thus disposed in such a way that one satellite wagon is located between the centermost support 9 and one of the outermost supports 9. Correspondingly, the second satellite wagon is located between the centermost support 9 and the other outermost support 9. Therefore, there are always two satellite wagons side by side and they are called a satellite wagon pair 10.

Fig. 1 also presents a second pair of satellite wagons, which can be seen slightly under the stack 1 on the left-hand side. The main wagon 2 can therefore be arranged to serve more than one satellite wagon pair 10. This second satellite wagon pair is not necessarily needed but, particularly in very large storages, it adds capacity. At the bottom edge of Fig. 1 a satellite wagon pair 10' can also be seen, which can be a back-up. In other words, from it one satellite wagon 10' or both satellite wagons 10' are taken into use if a defect occurs in the regular satellite wagons 10 or if they otherwise need servicing. In the storage system, commissioning of the replacement satellite wagon 10' is easy without requiring installation work or connection work.

The storage system thus operates in practice in such a way that e.g. when a new board stack is brought into the storage, it comes along the conveyor 4 to the main wagon 2, which then transfers the stack to the point of the correct storage row 8. Already under the main wagon 2, or driven there from the storage row 8 in question, is a satellite wagon pair 10, which lifts the board stack slightly upwards and transfers the board stack to the storage row and lowers it to the correct spot resting on the supports 9. After that, the satellite wagon pair 10 can be driven back to the main wagon 2.

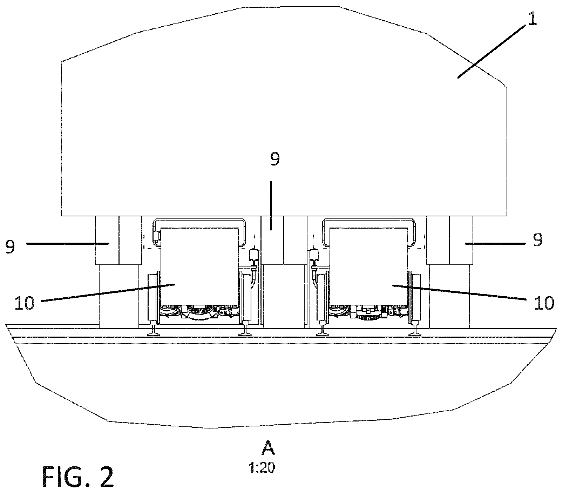

Fig. 2 presents a situation in which a board stack 1 is resting on supports 9 on a storage row. The satellite wagons 10 are ready to lift a stack upwards from the supports 9 and after that to move the stack in the desired direction.

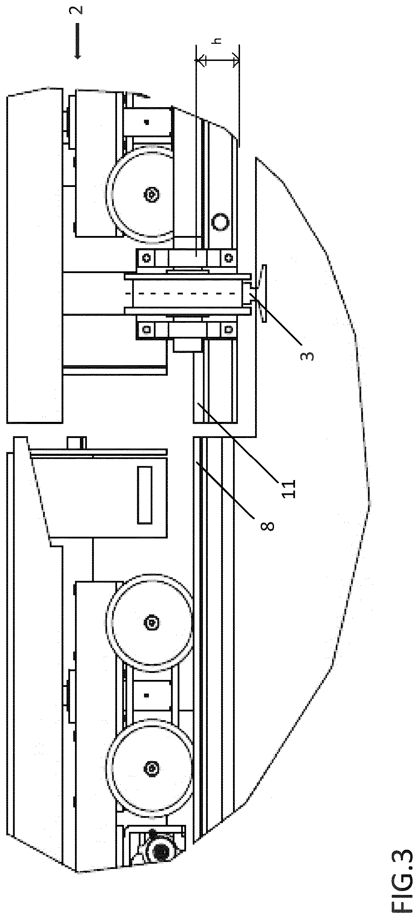

Fig. 3 presents what is meant by the structural or operational height dimension h of the main wagon 2. Of course, the longitudinal rails 11 of the main wagon 2 must be on the same plane as the longitudinal rails 8 of the storage so that the satellite wagon pair 10 is able to transfer between them. The smaller the height dimension h is, the less the structure under the longitudinal rails 8 needs to be raised. In other words, when the dimension h is small, less concrete and other such construction material is used.

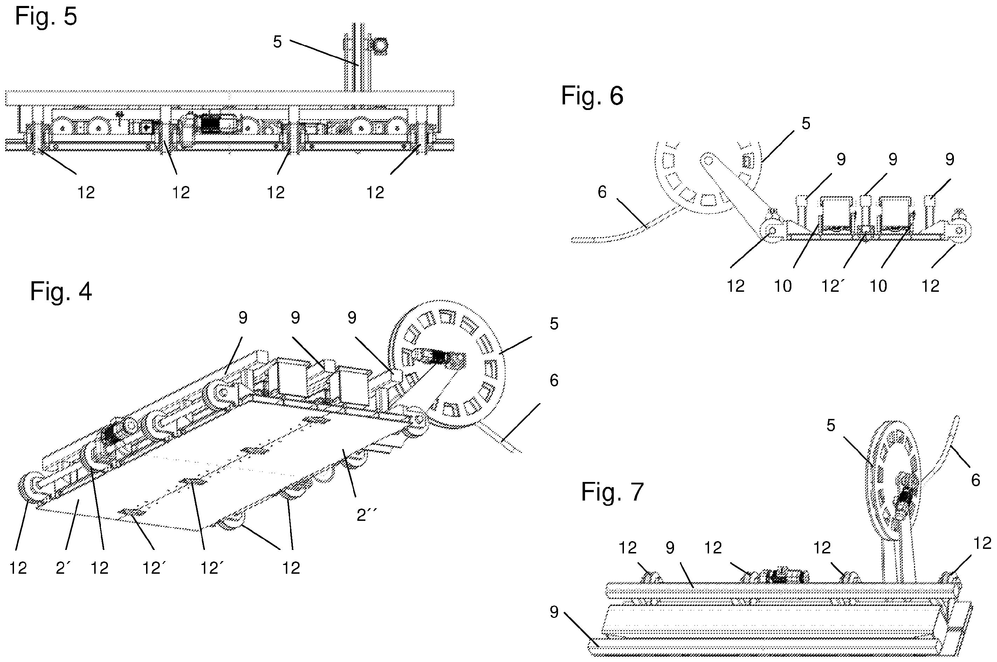

Fig. 4 presents an oblique view from below of a preferred embodiment of the main wagon 2 according to the invention. It shows the rail wheels at the front and at the rear (as viewed in the direction of movement) resting on the crosswise rails 3. This is a solution known in the art. Instead of this, the present invention is new in that the structure also comprises third rail wheel 12' for each crosswise rail 3. Of course, the solution presented in Fig. 4 is only one option. It would also be possible that only one or some crosswise rails 3 would have a third rail wheel 12'. In this embodiment, however, there are three rail wheels 12, 12' resting on all the crosswise rails 3. Since there are four crosswise rails 3 one beside another (Fig. 1) there are also, of course, four rail wheels 12, 12' one beside another. It is also obvious that there can be more than three rail wheels resting on each crosswise rail 3, i.e. in addition to the front and rear rail wheels, there would be two or more center rail wheels 12'.

The centermost rail wheels 12' are situated in the case of Fig. 4 between the two centermost longitudinal rails 11 on the main wagon 2. It is also possible that the centermost rail wheel 12' of the three rail wheels 12, 12' resting on a crosswise rail 3 is situated essentially on the longitudinal center line of the main wagon 2.

It is also possible that, instead of an ordinary rail wheel 12, 12', two wheels of smaller diameter are arranged. The wheels of a smaller diameter can be arranged with pivoted or flexible bogie suspension to bear an essentially equal load. This solution is not presented in the drawings.

It can also be seen from Fig. 4 that the main wagon 2 is assembled from two frame modules 2', 2'' that are fastened to each other at the installation site with some fastening method, such as by welding or with a bolted joint. The joint face between these frame modules 2', 2'' is between the two centermost rails in the direction of movement of the main wagon 2, and possibly on essentially the longitudinal center line of the main wagon, as in the solution according to Fig. 4.

Figs. 5-7 further present a main wagon according to the invention, as viewed from different directions.

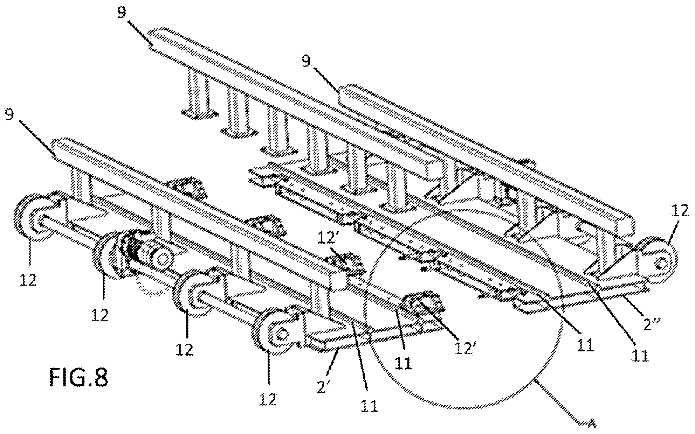

Fig. 8 presents a partly exploded view of the main wagon 2 according to the invention. The main wagon 2 thus comprises two frame modules 2' and 2''. In this case, the centermost rail wheels are fastened to the frame module 2' and in the other frame module are corresponding grooves for fitting them. The supports 9, of which there are three units, of the board stacks 1 are marked with the reference number 9. The longitudinal rails 11 of a satellite wagon pair are installed between them.

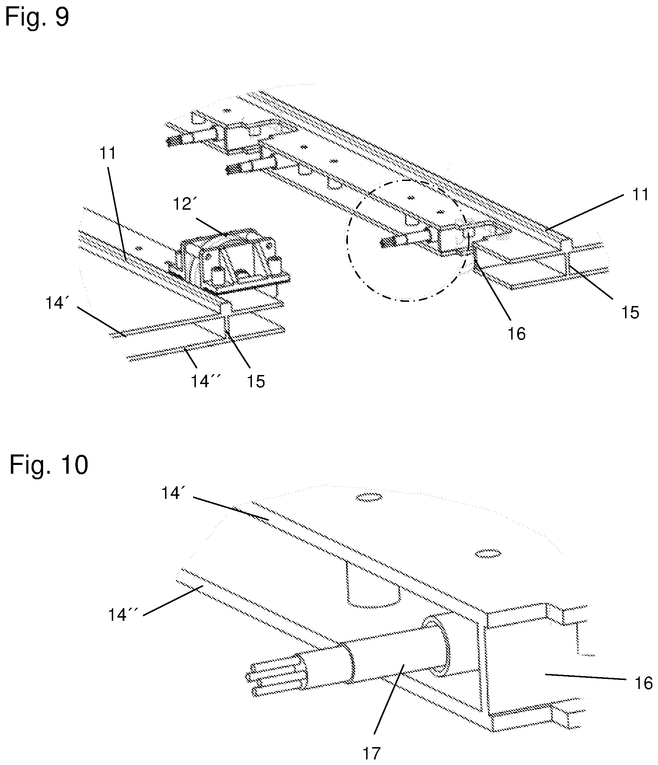

In Fig. 9 it can be seen that the frame of the main wagon can comprise two steel plates 14', 14'' on the horizontal plane arranged at a distance from each other as well as two longitudinal and transverse web plates 15, 16 installed between them.

As can be seen in Fig. 10, in the longitudinal web plates 15 of the frame of the main wagon is at least one aperture for bringing in an electric cable 17 from below the longitudinal rail 11 (the longitudinal rails 11 are not visible in Fig. 10, but their location can be seen from Fig. 9).

It is obvious to the person skilled in the art that the invention is not limited to the embodiments presented above, but that it can be varied within the scope of the claims presented below.

## Claims

1. A storage system for use in factories fabricating boards, especially particle boards, OSB board or MDF boards, the storage system comprising longitudinal rails (8) of the storage and crosswise rails (3) of the storage as well as at least one satellite wagon pair (10) that is arranged to move along longitudinal rails (8), and at least one main wagon (2) that is arranged to move along the crosswise rails (3) by means of rail wheels (12) installed on the main wagon (2), the main wagon (2) comprising two longitudinal rail pairs (11) for a satellite wagon pair, **characterized in that** at the point of at least one crosswise rail (3) the main wagon (2) has at least three rail wheels (12, 12') resting consecutively in the longitudinal direction on the top surface of the rail (3) in question.

2. A storage system according to claim 1, **characterized in that** at the point of each crosswise rail (3) the main wagon (2) has at least three rail wheels (12, 12') resting on the rail (3).

3. A storage system according to claim 1 or 2, **characterized in that** the centermost rail wheel (12') of the three rail wheels (12, 12') resting consecutively on a crosswise rail (3) is situated between the two centermost longitudinal rails (11) on the main wagon (2).

4. A storage system according to any of claims 1-3, **characterized in that** the centermost rail wheel (12') of the three rail wheels (12') resting on a crosswise rail (3) is situated essentially on the longitudinal center line of the main wagon (2).

5. A storage system according to any of claims 1-4, **characterized in that** one or more of the rail wheels (12, 12') comprise two wheels smaller in diameter than the other rail wheels.

6. A storage system according to claim 5, **characterized in that** the wheels of a smaller diameter are arranged with pivoted or flexible bogie suspension to bear an essentially equal load.

7. A storage system according to any of claims 1-6, **characterized in that** the main wagon (2) comprises two frame modules (2', 2"), the joint face between the modules being between the two centermost rails (11) in the direction of movement of the main wagon (2).

8. A storage system according to any of claims 1-7, **characterized in that** the main wagon (2) comprises two frame modules (2', 2''), the joint face between the modules being essentially on the longitudinal center line of the main wagon (2).

9. A storage system according to any of claims 1-8, **characterized in that** the frame of the main wagon (2) comprises two steel plates (14', 14'') arranged at a distance from each other on the horizontal plane as well as two longitudinal and transverse web plates (15, 16) installed between them.

10. A storage system according to claim 9, **characterized in that** in the longitudinal web plates (15) of the frame of the main wagon (2) is at least one aperture for bringing in an electric cable (17) from below the longitudinal rail (11).

## Patentansprüche

1. Lagersystem zur Verwendung in Fabriken, die Platten, insbesondere Spanplatten, OSB-Platten oder MDF-Platten herstellen, wobei das Lagersystem Folgendes umfasst: Längsschienen (8) des Lagers und Querschienen (3) des Lagers sowie mindestens ein Satellitenwagenpaar (10), das so angeordnet ist, dass es sich entlang der Längsschienen (8) bewegt, und mindestens einen Hauptwagen (2), der so angeordnet ist, dass er sich entlang der Querschienen (3) mittels Schienenrädern (12) bewegt, die an dem Hauptwagen (2) angebracht sind, wobei der Hauptwagen (2) zwei Längsschienenpaare (11) für ein Satellitenwagenpaar umfasst, **dadurch gekennzeichnet, dass** der Hauptwagen (2) an der Stelle mindestens einer Querschiene (3) mindestens drei Schienenräder (12, 12') aufweist, die in der Längsrichtung nacheinander auf der Oberseite der betreffenden Schiene (3) aufliegen.

2. Lagersystem nach Anspruch 1, **dadurch gekennzeichnet, dass** der Hauptwagen (2) an der Stelle jeder Querschiene (3) mindestens drei Schienenräder (12, 12') aufweist, die auf der Schiene (3) aufliegen.

3. Lagersystem nach Anspruch 1 oder 2, **dadurch gekennzeichnet, dass** sich das mittigste Schienenrad (12') der drei nacheinander auf einer Querschiene (3) aufliegenden Schienenräder (12, 12') zwischen den beiden mittigsten Längsschienen (11) am Hauptwagen (2) befindet.

4. Lagersystem nach einem der Ansprüche 1 bis 3,
**dadurch gekennzeichnet, dass** sich das mittigste Schienenrad (12') der drei auf einer Querschiene (3) aufliegenden Schienenräder (12') im Wesentlichen auf der Längsmittellinie des Hauptwagens (2) befindet.

5. Lagersystem nach einem der Ansprüche 1 bis 4,
**dadurch gekennzeichnet, dass** eines oder mehrere der Schienenräder (12, 12') zwei Räder mit einem kleineren Durchmesser als die anderen Schienenräder umfassen.

6. Lagersystem nach Anspruch 5, **dadurch gekennzeichnet, dass** die Räder mit kleinerem Durchmesser mit einer schwenkbaren oder flexiblen Drehgestellaufhängung angeordnet sind, um eine im Wesentlichen gleiche Last zu tragen.

7. Lagersystem nach einem der Ansprüche 1 bis 6,
**dadurch gekennzeichnet, dass** der Hauptwagen (2) zwei Rahmenmodule (2', 2") umfasst, wobei die Stoßfläche zwischen den Modulen in Bewegungsrichtung des Hauptwagens (2) zwischen den beiden mittigsten Schienen (11) liegt.

8. Lagersystem nach einem der Ansprüche 1 bis 7,
**dadurch gekennzeichnet, dass** der Hauptwagen (2) zwei Rahmenmodule (2', 2") umfasst, wobei die Stoßfläche zwischen den Modulen im Wesentlichen auf der Längsmittellinie des Hauptwagens (2) liegt.

9. Lagersystem nach einem der Ansprüche 1 bis 8,
**dadurch gekennzeichnet, dass** der Rahmen des Hauptwagens (2) zwei Stahlbleche (14', 14"), die in der Horizontalebene in einem Abstand zueinander angeordnet sind, sowie zwei zwischen ihnen angebrachte Längs- und Querstegbleche (15, 16) umfasst.

10. Lagersystem nach Anspruch 9, **dadurch gekennzeichnet, dass** in den Längsstegblechen (15) des Rahmens des Hauptwagens (2) mindestens eine Öffnung zum Einführen eines elektrischen Kabels (17) von unterhalb der Längsschiene (11) vorhanden ist.

## Revendications

1. Système de stockage destiné à être utilisé dans des usines de fabrication de panneaux, notamment de panneaux de particules, de panneaux OSB ou de panneaux MDF, le système de stockage comprenant des rails longitudinaux (8) du stockage et des rails transversaux (3) du stockage ainsi qu'au moins une paire de chariots satellites (10) qui est agencée pour se mettre en mouvement le long des rails longitudinaux (8), et au moins un chariot principal (2) qui est agencé pour se mettre en mouvement le long des rails transversaux (3) au moyen de roues de rail (12) installées sur le chariot principal (2), le chariot principal (2) comprenant deux paires de rails longitudinaux (11) pour une paire de chariots satellites, **caractérisé en ce qu'**au niveau d'au moins un rail transversal (3), le chariot principal (2) comporte au moins trois roues de rail (12, 12') reposant consécutivement dans la direction longitudinale sur la surface de dessus du rail (3) en question.

2. Système de stockage selon la revendication 1, **caractérisé en ce qu'**au niveau de chaque rail transversal (3), le chariot principal (2) comporte au moins trois roues de rail (12, 12') reposant sur le rail (3).

3. Système de stockage selon la revendication 1 ou 2, **caractérisé en ce que** la roue de rail (12') la plus centrale des trois roues de rail (12, 12') reposant consécutivement sur un rail transversal (3) est située entre les deux rails longitudinaux (11) les plus centraux sur le chariot principal (2).

4. Système de stockage selon l'une quelconque des revendications 1 à 3, **caractérisé en ce que** la roue de rail (12') la plus centrale des trois roues de rail (12') reposant sur un rail transversal (3) est située essentiellement sur la ligne centrale longitudinale du chariot principal (2).

5. Système de stockage selon l'une quelconque des revendications 1 à 4, **caractérisé en ce qu'**une ou plusieurs des roues de rail (12, 12') comprennent deux roues de diamètre plus petit que celui des autres roues de rail.

6. Système de stockage selon la revendication 5, **caractérisé en ce que** les roues ayant un plus petit diamètre sont agencées avec une suspension à bogie pivotante ou flexible pour supporter une charge essentiellement égale.

7. Système de stockage selon l'une quelconque des revendications 1 à 6, **caractérisé en ce que** le chariot principal (2) comprend deux modules de châssis (2', 2"), la face de jonction entre les modules étant entre les deux rails (11) les plus centraux dans la direction de mouvement du chariot principal (2).

8. Système de stockage selon l'une quelconque des revendications 1 à 7, **caractérisé en ce que** le chariot principal (2) comprend deux modules de châssis (2', 2"), la face de jonction entre les modules étant essentiellement sur la ligne centrale longitudinale du chariot principal (2).

9. Système de stockage selon l'une quelconque des revendications 1 à 8, **caractérisé en ce que** le châssis du chariot principal (2) comprend deux plaques d'acier (14', 14") agencées à distance l'une de l'autre sur le plan horizontal, ainsi que deux âmes longitudinales et transversales (15, 16) installées entre elles.

10. Système de stockage selon la revendication 9, **caractérisé en ce que** dans les âmes longitudinales (15) du châssis du chariot principal (2) est prévue au moins une ouverture pour l'introduction d'un câble électrique (17) par le dessous du rail longitudinal (11).
